(19) **Europäisches Patentamt**
**European Patent Office**
**Office européen des brevets**

(11) **EP 4 008 457 A1**

(12) **EUROPEAN PATENT APPLICATION**

(43) Date of publication:
**08.06.2022 Bulletin 2022/23**

(21) Application number: **21210643.9**

(22) Date of filing: **26.11.2021**

(51) International Patent Classification (IPC):
**B22F 10/28** (2021.01)    **B22F 10/64** (2021.01)
**B33Y 40/20** (2020.01)    **B33Y 70/00** (2020.01)
**C22C 21/00** (2006.01)    **C22C 1/04** (2006.01)

(52) Cooperative Patent Classification (CPC):
(C-Sets available)
**B33Y 70/00; B22F 10/28; B22F 10/64; B33Y 40/20; C22C 1/0416; C22C 21/00; C22F 1/002; C22F 1/04;** B22F 2998/10          (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.12.2020 DE 102020131823**

(71) Applicant: **Airbus Defence and Space GmbH 82024 Taufkirchen (DE)**

(72) Inventors:
• **Palm, Frank**
**82024 Taufkirchen (DE)**
• **Schimbäck, David**
**82024 Taufkirchen (DE)**

(74) Representative: **KASTEL Patentanwälte PartG mbB**
**St.-Cajetan-Straße 41**
**81669 München (DE)**

(54) **ALUMINIUM ALLOY AND PROCESS FOR ADDITIVE MANUFACTURE OF LIGHTWEIGHT COMPONENTS**

(57)    The invention relates to an alloy which consists of aluminium, titanium, scandium and zirconium with or without one, two or more further metals selected from hafnium, vanadium, niobium, chromium, molybdenum, silicon, iron, cobalt, nickel and calcium. The aluminium alloy is suitable for the additive manufacture of lightweight components for aircraft. In a first additive manufacturing step, such as laser melting by the L-PBF process (laser powder bed fusion), a lightweight component precursor is produced from a powder of the aluminium alloy of the invention, this precursor comprising titanium, scandium and zirconium in solid solution, as a result of rapid solidification of the laser melt. In a second step the lightweight component precursor is hardened by precipitation of secondary phases at 250 to 400°C to give the lightweight component. 3D-printed lightweight components of high strength are obtained.

Fig. 4

**(Cont. next page)**

(52) Cooperative Patent Classification (CPC): (Cont.)

C-Sets
B22F 2998/10, B22F 9/08, B22F 9/082,
B22F 10/28, B22F 10/64

**Description**

The invention relates to an aluminium alloy, to a process for additive manufacture of lightweight components using a powder of this aluminium alloy, and to the lightweight components produced by this process.

Aluminium alloys are an important material for the production of lightweight components for aircraft. The reduction in total aircraft weight that is associated with the incorporation of these lightweight components into aircraft enables a reduction in fuel costs. The aluminium alloys which can be used for this purpose must additionally, from the standpoint of flight safety, possess high tensile strength, ductility, toughness and corrosion resistance.

Examples of aluminium alloys which can be used in aircraft manufacture are the alloys having the designations AA2024, AA7349 and AA6061. In addition to aluminium as the basis metal, they contain magnesium and copper as essential alloying partners, and additionally - necessarily or optionally - manganese, zirconium, chromium, iron, silicon, titanium and/or zinc.

One significant development is represented by the scandium-containing aluminium alloys, which are available commercially under the product name Scalmalloy® from APWorks GmbH, for example. They have even greater strength, ductility and corrosion resistance than the alloys referred to earlier on above. Of all the transition metals, scandium displays the greatest increase in strength through precipitation hardening of $Al_3Sc$. Because of the low solubility of scandium in aluminium (about 0.3 wt% at around 660°C), however, Scalmalloy® has to be produced by rapid solidification of a melt, such as melt spinning, and subsequent precipitation hardening, with formation of secondary $Al_3Sc$ precipitates in the aluminium matrix.

Additional information on Scalmalloy® is available in the publications "Scalmalloy® - A unique high strength and corrosion insensitive AlMgScZr material concept" (A.J. Bosch, R. Senden, W. Entelmann, M. Knüwer, F. Palm, "Proceedings of the 11th International Conference on Aluminum Alloys in: "Aluminum Alloys: Their physical and mechanical properties", J. Hirsch, G. Gottstein, B. Skrotzki, Wiley-VCH) and "Metallurgical peculiarities in hyper-eutectic AlSc and AlMgSc engineering materials prepared by rapid solidification processing" (F. Palm, P. Vermeer, W. von Bestenbostel, D. Isheim, R. Schneider (loc. cit.)).

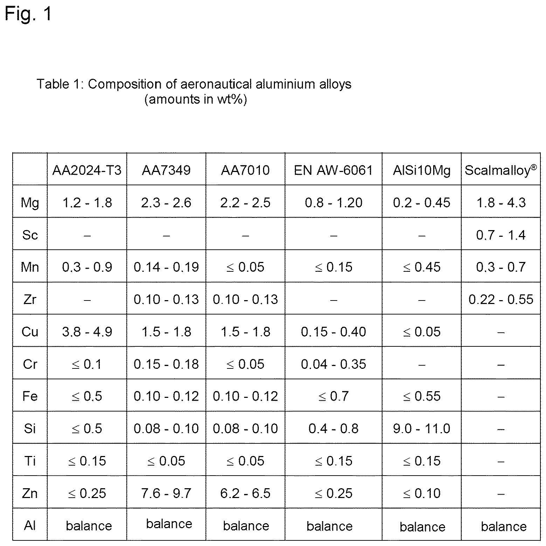

Table 1 in Fig. 1 shows the chemical composition of the aluminium alloys indicated above that can be used for producing lightweight components for aircraft.

Another advantage of Scalmalloy® is its suitability for the additive manufacture of lightweight components. In addition to processes such as wire arc additive manufacturing (WAAM), it is suitable in particular for laser powder bed fusion. This additive manufacturing process is also referred to below as the L-PBF process (L-PBF = laser powder bed fusion). The number of alloys which can be used for this process is limited. According to WO 2018/144323, reliable additive manufacture by the L-PBF process is possible with the alloys Scalmalloy®, AlSi10Mg, TiAl6V4, CoCr and Inconel 718, while the great majority of the more than 5500 alloys nowadays employed cannot be used for the L-PBF process or 3D printing.

It is an object of the present invention to provide an improved aluminium alloy which is suitable for additive manufacturing with a sufficiently rapid cooling rate, in the L-PBF process, for example.

The object is achieved by the aluminium alloy according to Claim 1. Advantageous refinements are subjects of the dependent claims.

According to a first aspect, the invention provides an aluminium alloy which comprises the following alloy components:

- Ti in a fraction of 0.1 to 15.0 wt%,
- Sc in a fraction of 0.1 to 3.0 wt%,
- Zr in a fraction of 0.1 to 3.0 wt%,
- balance: Al and unavoidable impurities.

The incorporation of Ti brings with it a number of advantages. The LPB-F process is stable because of the absence of metals with high vapour pressure or low enthalpy of vaporization, such as Mg or Zn. Ti increases the strength through grain refinement, in that coherent, primary $Al_3X$ phases (X = Ti, Zr, Sc) are precipitated and act as nucleation sites, together with the high constitutional subcooling produced by the incorporation of Ti. The strength increases through precipitation hardening of secondary phases during the subsequent thermal aftertreatment. An AlSc alloy additionally comprising Ti exhibits even better corrosion resistance.

Ti does not produce such a large increase in strength at room temperature as Sc or Zr in an aluminium alloy. The majority of the Ti remains in solution in the solid solution during the rapid solidification. The coarsening of the precipitates is slower than predicted. The long-term durability or creep resistance is increased.

The chemical driving force $\Delta F_{ch}$ for the precipitation is significantly greater than $Al_3Zr$ than for $Al_3Ti$. The elastic strain energy of $Al_3Ti$ in the precipitation, $\Delta F_{el}$, prevents nucleation and is seven times greater than the elastic strain energy of $Al_3Zr$. On rapid cooling, up to 2 wt% of Ti may be forcibly dissolved in the aluminium matrix.

An advantage of Ti in the context of the additive manufacture of lightweight components from the aluminium alloy by the L-PBF process (or SLM process: selective laser melting) is its low vapour pressure or high enthalpy of vaporization. The vapour pressure of Ti is lower than that of the basis metal aluminium. The enthalpy of vaporization of Ti is higher than that of the basis metal aluminium. As a result, the process stability is improved in that the melting bath on remelting is much calmer by comparison with magnesium-containing aluminium alloys.

Ti ensures a high level of constitutional subcooling during solidification, leading to the activation of potent primary nucleation sites in the melt and hence resulting in grain refinement. The fine microstructure increases the strength of the aluminium alloy in accordance with Hall-Petch (strength increase is inverse proportion to the grain size, according to $d^{-\frac{1}{2}}$ ).

Zr produces effective nucleation sites in the melt even at high temperatures, since $Al_3Zr$ is deposited already at around 900°C and can therefore be activated by the constitutional subcooling. In contrast to this, $Al_3Sc$ is not precipitated until shortly before the solidus temperature is reached.

It is preferable for the aluminium alloy to contain Ti in a fraction of 0.5 wt% to 5.0 wt%, Sc in a fraction of 0.2 wt% to 1.5 wt% and Zr in a fraction of 0.2 wt% to 1.5 wt%.

It is preferable for the aluminium alloy to contain Ti in a fraction of 1.0 wt% to 5.0 wt%, preferably 1.0 wt% to 4.0 wt%, Sc in a fraction of 0.5 wt% to 1.0 wt% and Zr in a fraction of 0.2 wt% to 0.8 wt%.

It is preferable for the aluminium alloy to comprise one, two or more metals selected from the group consisting of hafnium (Hf), vanadium (V), niobium (Nb), chromium (Cr), molybdenum (Mo), silicon (Si), iron (Fe), cobalt (Co) and nickel (Ni), the fraction of each of these elements individually

- corresponding to up to 100%, preferably at most 90%, preferably at most 70%, more preferably at most 50% of the Ti fraction, with the proviso that the total fraction of these metals accounts for at most 15 wt% and preferably at most 10 wt% of the aluminium alloy according to any of Claims 1 to 3, or
- being from 0.1 wt% to 2 wt%, with the proviso that the total fraction of these metals accounts for at most 15 wt% and preferably at most 10 wt% of the aluminium alloy according to any of Claims 1 to 3.

It is preferable for the aluminium alloy, other than aluminium and unavoidable impurities, to comprise exclusively metals which have a higher enthalpy of vaporization or a lower vapour pressure than aluminium.

It is preferable for the aluminium alloy to comprise calcium (Ca) in a fraction in the range from 0.1 to 5 wt%, preferably in the range from more than 0.5 wt% to 5 wt%, more preferably in the range from 0.7 wt% to 3 wt%. Calcium on laser melting forms a coating of calcium oxide which hinders the unwanted evaporation of alloying elements.

It is preferable for the aluminium alloy to contain no magnesium and/or no manganese.

It is preferable for the aluminium alloy to consist of the combination of alloy components that has been described earlier on above.

It is preferable for the aluminium alloy, apart from unavoidable impurities, to consist of Al, Ti, Sc and Zr or of Al, Ti, Sc, Zr and one, two or more of the metals referred to earlier on above.

It is preferable for the aluminium alloy, apart from unavoidable impurities, to consist of Al, Ti, Sc, Zr and Cr, the Cr fraction being in the range from 0.2 wt% to 3.5 wt%, preferably 0.5 to 3.0 wt%.

It is preferable for the aluminium alloy, apart from unavoidable impurities, to consist of Al, Ti, Sc, Zr and Ni, the Ni fraction being in the range from 0.2 wt% to 2.5 wt%, preferably 0.5 wt% to 2.0 wt%.

It is preferable for the aluminium alloy, apart from unavoidable impurities, to consist of Al, Ti, Sc, Zr and Mo, the Mo fraction being in the range from 0.1 wt% to 1.3 wt%, preferably 0.5 wt% to 1.0 wt%.

It is preferable for the aluminium alloy, apart from unavoidable impurities, to consist of Al, Ti, Sc, Zr and Fe, the Fe fraction being in the range from 0.1 wt% to 2.5 wt%, preferably 0.5 wt% to 2.0 wt%.

It is preferable for the aluminium alloy, apart from unavoidable impurities, to consist of Al, Ti, Sc, Zr and Ca, the Ca fraction being in the range from 0.1 wt% to 5 wt%, preferably in the range from more than 0.5 wt% to 5 wt%, more preferably in the range from 0.7 wt% to 3 wt%.

According to a second aspect, the invention provides a process for additive manufacture of a lightweight component precursor, which comprises:

> a) co-melting the metals to give an aluminium alloy melt;
> b) actively or passively cooling the aluminium alloy melt
>
> > b1) in a rapid solidification process with a cooling rate of 1000 K/s to 10 000 000 K/s, more particularly 100 000 K/s to 1 000 000 K/s, for example melt spinning, powder atomization by means of gas or in water, thin strip casting or spray compacting, to give a solidified aluminium alloy optionally in powder form, with scandium contained in solid solution therein; or
> > b2) in a cooling process, to give a solidified aluminium alloy;
>
> c) comminuting the aluminium alloy from step b1) or b2) to give a powder.

It is preferable for the cooling rate in step b) or step b1) to be maintained at least in a temperature range from 1800 K to 500 K.

If the molten aluminium alloy is cooled in step b), if the cooling rate is not too high, such as when the melt is cast into a crucible, the result is an aluminium matrix, with the alloying elements Ti, Sc and Zr being present primarily in the form of large primary precipitates. If the above aluminium alloy is cooled very rapidly, such as at a rate of 1000 K/s to 10 000 000 K/s, the solidified aluminium alloy comprises the above-stated alloying elements substantially in solid solution. The precipitation of primary phases is suppressed by rapid cooling. The more rapidly the melt is cooled, the lower the fraction of primary precipitates. In the case of subsequent precipitation hardening at temperatures, for example, of 250 to 450°C, nanoscale, coherent $Al_3X$ phases (X = Ti, Zr, Sc) are precipitated, and ensure a great improvement in the strength of the aluminium alloy.

In step e), after the melting of the powder with the laser beam, there is very rapid cooling, during which the alloying elements solidify substantially in solid solution. This process step overall represents a remelting to give the desired alloy.

According to a third aspect, the invention provides a process for additive manufacture of a lightweight component precursor from an aluminium alloy as described earlier on above, which comprises:

   d) producing a powder bed from the powder obtained in step c) of Claim 10;
   e) additively manufacturing a three-dimensional lightweight component precursor in a laser melting process in the powder bed with a laser, with local melting of the powder and active or passive cooling of the locally melted region, to give a lightweight component precursor composed of an aluminium alloy with scandium obtained in solid solution.

According to a fourth aspect, the invention provides a process for producing a lightweight component which comprises heat-treating the lightweight component precursor obtained in the process described earlier on above at a temperature at which the lightweight component precursor is hardened by precipitation hardening.

According to a fifth aspect, the invention provides a lightweight component precursor which is obtainable by the additive manufacturing process described above.

According to sixth aspect, the invention provides a lightweight component precursor which is obtainable by the hardening process described above.

According to a seventh aspect, the invention provides for the use of the aluminium alloy as described earlier on above or of the powder obtainable by the process described above for producing a lightweight component precursor by selective laser melting and producing a lightweight component by selective laser melting and subsequent precipitation hardening.

A working example is elucidated in more detail below with reference to the appended drawings, in which:

Fig. 1    shows the chemical composition of common aluminium alloys for lightweight aeronautical components in table 1;
Fig. 2    shows the physical properties of the most important alloying elements in table 2;
Fig. 3    shows the vapour pressure as a function of the temperature of the constituents of Scalmalloy®;
Fig. 4    shows the vapour pressure as a function of the temperature of the constituents of an alloy of the invention.

Fig. 1 shows in table 1 the composition of aluminium alloys which are used for producing lightweight aeronautical components. Like duralumin, the alloys AA2024, AA7349, AA7010 and AA6061 contain magnesium and copper.

Duralumin is an aluminium alloy developed in 1906 by Alfred Wilm, which was found to have a strength that could be boosted significantly by precipitation hardening. With the boost in strength thus achieved it became possible to employ aluminium in alloyed form in aeronautics.

A further considerable boost to strength of aluminium is possible through the incorporation of scandium, as in the case of Scalmalloy®. Because of the low solubility of scandium in aluminium at room temperature, however, the scandium here first has to be forcibly dissolved in the aluminium in a rapid solidification process, such as melt spinning, before the precipitation hardening can be carried out at a temperature in the range from 250°C to 450°C.

A peculiarity of the two aluminium alloys AlSi10Mg and Scalmalloy® in table 1 is that they are suitable for laser melting by the L-PBF process. These two alloys may therefore be processed to lightweight components for aircraft by additive manufacturing.

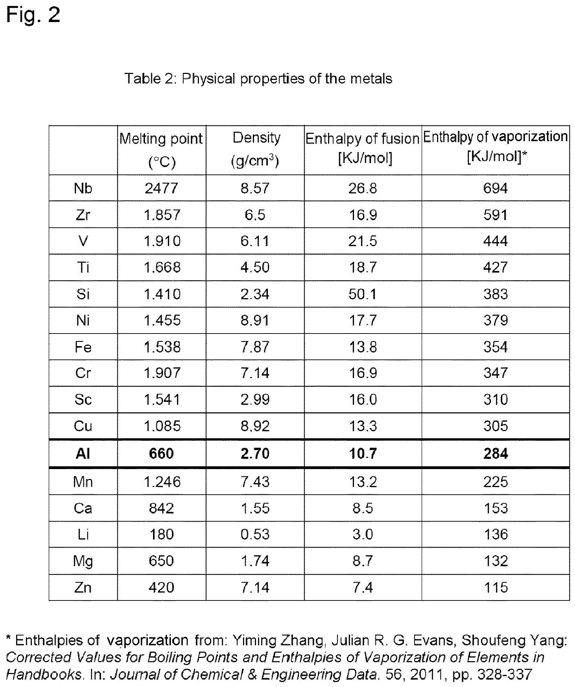

Fig. 2 shows in table 2 the physical properties of various alloying elements. The alloying elements above aluminium have a higher enthalpy of vaporization than aluminium. Those below aluminium have a lower enthalpy of vaporization than aluminium.

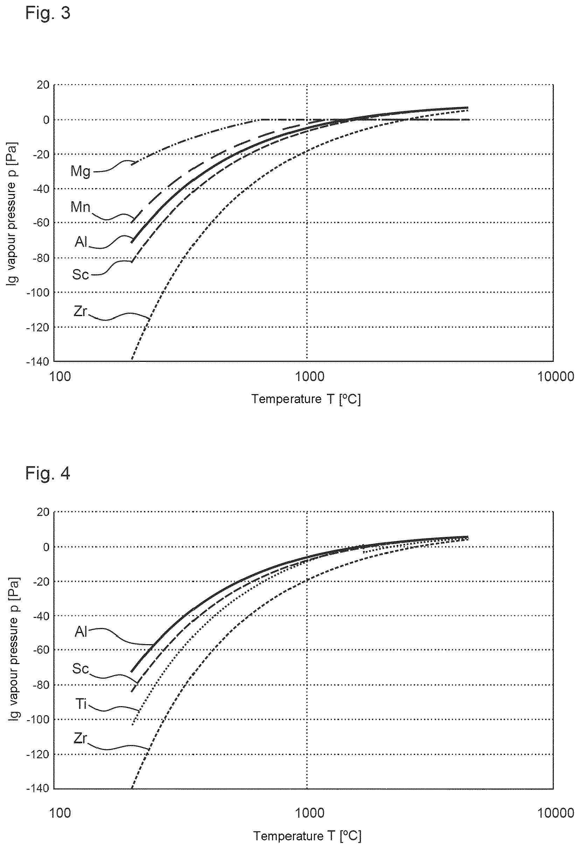

Fig. 3 shows, in a diagram, the temperature dependency of the vapour pressure of the alloy constituents of Scalmalloy®.

Fig. 4 shows, in a diagram, the temperature dependency of the vapour pressure of an aluminium alloy of the invention.

Described below are processes for producing aluminium alloys, a lightweight component precursor and a lightweight component.

A) Processes for producing aluminium alloys

Example 1 Production of aluminium alloys in powder form

In an inert crucible, 0.75 wt% of Sc, 0.35 wt% of Zr, 1.0 wt% of Ti and 97.9 wt% of Al are melted. The melt may be homogenized prior to further processing.

A first fraction of the melt is poured into an inert crucible, in which it cools and solidifies. On cooling, primary $Al_3Sc$, $Al_3Zr$ and $Al_3Ti$ phases are precipitated. The material obtained is comminuted to a powder, which can be used for selective laser melting in a powder bed.

A second fraction of the melt is poured in a melt spinning process onto a rotating, water-cooled copper roll. The melt cools at a rate of 1 000 000 K/s to form a strip. The cooling of the melt is sufficiently rapid to suppress a substantial part or all of the formation of $Al_3Sc$, $Al_3Zr$ and $Al_3Ti$. The strip is cut into short flakes.

The alloy material obtained in the two cooling processes is comminuted to a powder, which can be used for selective laser melting in a powder bed.

Example 2 Production of aluminium alloys in powder form with differing titanium content

The above process is repeated, with the fraction of Ti being increased to 3.0 wt%, 5.0 wt%, 10.0 wt% and 15.0 wt% and the fraction of Al being reduced correspondingly. The fraction of Sc and Zr remains unchanged.

Example 3 Production of an aluminium alloy in powder form containing vanadium

The process of example 1 is repeated, with additionally 2.0 wt% of vanadium being placed into the crucible and with the fraction of Ti, Sc and Zr kept constant.

Example 4 Production of an aluminium alloy in powder form containing nickel

The process of example 1 is repeated, with additionally 1.2 wt% of nickel being placed into the crucible and with the fraction of Ti, Sc and Zr kept constant.

Example 5 Production of an aluminium alloy in powder form containing chromium-vanadium

The process of example 1 is repeated, with additionally 1.0 wt% of vanadium and 2.0 wt% of chromium being placed into the crucible, and with the fraction of titanium being increased to 5 wt%. The Zr fraction remains unchanged.

B) Processes for producing a lightweight component precursor by the L-PBF process

A respective aluminium alloy powder from each of the above examples 1 to 5 is placed into a plant for additive manufacture by selective laser melting, to form a powder bed. The laser beam is moved over the three-dimensional powder bed in accordance with the digital information, with the powder bed being lowered step by step and with new powder layers being applied. The cooling of the locally melted aluminium alloy is sufficiently rapid but scandium, zirconium and titanium are "frozen" completely or substantially or predominantly in solid solution, irrespective of the composition of the aluminium alloy otherwise and irrespective of whether the powder was produced by normal cooling or by rapid cooling at a rate, for example, of 1 000 000 K/s. When the scanning procedure is at an end, the component precursor composed of the aluminium alloy is removed from the powder bed.

C) Processes for producing a lightweight component

The component precursor produced in B) is heated to a temperature, such as in the range from 250°C to 450°C, preferably 300°C to 400°C and more preferably 325°C to 350°C, at which diverse $Al_3X$ phases are precipitated (X = Ti, Zr, Sc or any desired non-stochiometric mixture of the individual elements. $Al_3Ti$ is likewise precipitated, but by comparison with $Al_3Sc$ and $Al_3Zr$ there remains a predominant or sizable fraction of the titanium in solid solution.

**Claims**

1. Aluminium alloy comprising the following alloy components:

   - titanium (Ti) in a fraction of 0.1 wt% to 15.0 wt%,
   - scandium (Sc) in a fraction of 0.1 wt% to 3.0 wt%,
   - zirconium (Zr) in a fraction of 0.1 wt% to 3.0 wt%,
   - balance: aluminium (Al) and unavoidable impurities.

2. Aluminium alloy according to Claim 1, **characterized in that** it comprises Ti in a fraction of 0.5 wt% to 5.0 wt%, Sc in a fraction of 0.2 wt% to 1.5 wt% and Zr in a fraction of 0.2 wt% to 1.5 wt%.

3. Aluminium alloy according to Claim 1 or 2, **characterized in that** it comprises Ti in a fraction of 1.0 wt% to 5.0 wt%, preferably 1.0 wt% to 4.0 wt%, Sc in a fraction of 0.5 wt% to 1.0 wt% and Zr in a fraction of 0.2 wt% to 0.8 wt%.

4. Aluminium alloy according to any of Claims 1 to 3, **characterized in that** it comprises one, two or more metals selected from the group consisting of hafnium (Hf), vanadium (V), niobium (Nb), chromium (Cr), molybdenum (Mo), silicon (Si), iron (Fe), cobalt (Co) and nickel (Ni), the fraction of each of these elements individually

   - corresponding to up to 100%, preferably at most 90%, preferably at most 70%, more preferably at most 50% of the Ti fraction, with the proviso that the total fraction of these metals accounts for at most 15 wt% and preferably at most 10 wt% of the aluminium alloy according to any of Claims 1 to 3, or
   - being from 0.1 wt% to 2 wt%, with the proviso that the total fraction of these metals accounts for at most 15 wt% and preferably at most 10 wt% of the aluminium alloy according to any of Claims 1 to 3.

5. Aluminium alloy according to any of the preceding claims, **characterized in that** it comprises calcium (Ca) in a fraction in the range from 0.1 wt% to 5 wt%, preferably in the range from more than 0.5 wt% to 5 wt%, more preferably in the range from 0.7 wt% to 3 wt%.

6. Aluminium alloy according to any of the preceding claims, **characterized in that** as well as aluminium and unavoidable impurities it comprises exclusively metals which have a higher enthalpy of vaporization or a lower vapour pressure than aluminium.

7. Aluminium alloy according to any of the preceding claims, **characterized in that** it contains no magnesium and/or no manganese.

8. Aluminium alloy **characterized in that** it consists of the alloy components according to Claim 1.

9. Aluminium alloy according to any of the preceding claims, **characterized in that**, apart from unavoidable impurities, it consists of:

   - Al, Ti, Sc, Zr and one, two or more metals according to Claim 4;
   - Al, Ti, Sc, Zr and Cr, the Cr fraction being in the range from 0.2 wt% to 3.5 wt%, preferably 0.5 to 3.0 wt%;
   - Al, Ti, Sc, Zr and Ni, the Ni fraction being in the range from 0.2 wt% to 2.5 wt%, preferably 0.5 wt% to 2.0 wt%;
   - Al, Ti, Sc, Zr and Mo, the Mo fraction being in the range from 0.1 wt% to 1.3 wt%, preferably 0.5 wt% to 1.0 wt%;
   - Al, Ti, Sc, Zr and Fe, the Fe fraction being in the range from 0.1 wt% to 2.5 wt%, preferably 0.5 wt% to 2.0 wt%;
   - Al, Ti, Sc, Zr and Ca, the Ca fraction being in the range from 0.1 wt% to 5 wt%, preferably in the range from more than 0.5 wt% to 5 wt%, more preferably in the range from 0.7 wt% to 5 wt%.

10. Process for additive manufacture of a lightweight component precursor from an aluminium alloy according to any of Claims 1 to 9, which comprises:

    a) co-melting the metals to give an aluminium alloy melt;
    b) actively or passively cooling the aluminium alloy melt

    b1) in a rapid solidification process with a cooling rate of 1000 K/s to 10 000 000 K/s, more particularly 100 000 K/s to 1 000 000 K/s, for example melt spinning, powder atomization by means of gas or in water, thin strip casting or spray compacting, to give a solidified aluminium alloy optionally in powder form, with scandium contained in solid solution therein; or
    b2) in a cooling process, to give a solidified aluminium alloy;

    c) comminuting the aluminium alloy from step b1) or b2) to give a powder.

11. Process for additive manufacture of a lightweight component precursor from an aluminium alloy according to any of Claims 1 to 9, which comprises:

    d) producing a powder bed from the powder obtained in step c) of Claim 10;
    e) additively manufacturing a three-dimensional lightweight component precursor in a laser melting process in the powder bed with a laser, with local melting of the powder and active or passive cooling of the locally melted region, to give a lightweight component precursor composed of an aluminium alloy with scandium obtained in solid solution.

12. Process for producing a lightweight component, which comprises heat-treating the lightweight component precursor obtained in the process according to Claim 11 at a temperature at which the lightweight component precursor is hardened by precipitation hardening.

13. Lightweight component precursor obtainable by the process according to Claim 11.

14. Lightweight component precursor obtainable by the process according to Claim 12.

15. Use of the aluminium alloy according to any of Claims 1 to 9 or of the powder obtainable by the process according to Claim 10 for producing a lightweight component precursor by selective laser melting and producing a lightweight component by selective laser melting and subsequent precipitation hardening.

# Fig. 1

Table 1: Composition of aeronautical aluminium alloys
(amounts in wt%)

|  | AA2024-T3 | AA7349 | AA7010 | EN AW-6061 | AlSi10Mg | Scalmalloy® |
|---|---|---|---|---|---|---|
| Mg | 1.2 - 1.8 | 2.3 - 2.6 | 2.2 - 2.5 | 0.8 - 1.20 | 0.2 - 0.45 | 1.8 - 4.3 |
| Sc | – | – | – | – | – | 0.7 - 1.4 |
| Mn | 0.3 - 0.9 | 0.14 - 0.19 | ≤ 0.05 | ≤ 0.15 | ≤ 0.45 | 0.3 - 0.7 |
| Zr | – | 0.10 - 0.13 | 0.10 - 0.13 | – | – | 0.22 - 0.55 |
| Cu | 3.8 - 4.9 | 1.5 - 1.8 | 1.5 - 1.8 | 0.15 - 0.40 | ≤ 0.05 | – |
| Cr | ≤ 0.1 | 0.15 - 0.18 | ≤ 0.05 | 0.04 - 0.35 | – | – |
| Fe | ≤ 0.5 | 0.10 - 0.12 | 0.10 - 0.12 | ≤ 0.7 | ≤ 0.55 | – |
| Si | ≤ 0.5 | 0.08 - 0.10 | 0.08 - 0.10 | 0.4 - 0.8 | 9.0 - 11.0 | – |
| Ti | ≤ 0.15 | ≤ 0.05 | ≤ 0.05 | ≤ 0.15 | ≤ 0.15 | – |
| Zn | ≤ 0.25 | 7.6 - 9.7 | 6.2 - 6.5 | ≤ 0.25 | ≤ 0.10 | – |
| Al | balance | balance | balance | balance | balance | balance |

# Fig. 2

Table 2: Physical properties of the metals

|  | Melting point (°C) | Density (g/cm³) | Enthalpy of fusion [KJ/mol] | Enthalpy of vaporization [KJ/mol]* |
|---|---|---|---|---|
| Nb | 2477 | 8.57 | 26.8 | 694 |
| Zr | 1.857 | 6.5 | 16.9 | 591 |
| V | 1.910 | 6.11 | 21.5 | 444 |
| Ti | 1.668 | 4.50 | 18.7 | 427 |
| Si | 1.410 | 2.34 | 50.1 | 383 |
| Ni | 1.455 | 8.91 | 17.7 | 379 |
| Fe | 1.538 | 7.87 | 13.8 | 354 |
| Cr | 1.907 | 7.14 | 16.9 | 347 |
| Sc | 1.541 | 2.99 | 16.0 | 310 |
| Cu | 1.085 | 8.92 | 13.3 | 305 |
| **Al** | **660** | **2.70** | **10.7** | **284** |
| Mn | 1.246 | 7.43 | 13.2 | 225 |
| Ca | 842 | 1.55 | 8.5 | 153 |
| Li | 180 | 0.53 | 3.0 | 136 |
| Mg | 650 | 1.74 | 8.7 | 132 |
| Zn | 420 | 7.14 | 7.4 | 115 |

* Enthalpies of vaporization from: Yiming Zhang, Julian R. G. Evans, Shoufeng Yang: *Corrected Values for Boiling Points and Enthalpies of Vaporization of Elements in Handbooks*. In: *Journal of Chemical & Engineering Data.* 56, 2011, pp. 328-337

Fig. 3

Fig. 4

Europäisches Patentamt
European Patent Office
Office européen des brevets

# EUROPEAN SEARCH REPORT

Application Number

EP 21 21 0643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 218 586 A (INST MECHANICAL MFG TECH CHINA ACAD ENG PHYSICS) 2 June 2020 (2020-06-02) | 1,2,6, 10-15 | INV. B22F10/28 B22F10/64 B33Y40/20 B33Y70/00 C22C21/00 C22C1/04 |
| A | * example 1 * * paragraphs [0019] – [0022] * * claim 1 * | 3-5,7-9 | |
| X | EP 3 181 711 A1 (AIRBUS DEFENCE & SPACE GMBH [DE]) 21 June 2017 (2017-06-21) | 1,4, 9-12,15 | |
| A | * claim 1 * * paragraph [0010] * | 2,3,5-8, 13,14 | |

TECHNICAL FIELDS SEARCHED (IPC)

B22F
C22C
B33Y

The present search report has been drawn up for all claims

| Place of search | Date of completion of the search | Examiner |
|---|---|---|
| The Hague | 25 March 2022 | Helgadóttir, Inga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

11

# EP 4 008 457 A1

## ANNEX TO THE EUROPEAN SEARCH REPORT
## ON EUROPEAN PATENT APPLICATION NO.

EP 21 21 0643

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2022

| Patent document cited in search report | | Publication date | Patent family member(s) | | Publication date |
|---|---|---|---|---|---|
| CN 111218586 | A | 02-06-2020 | NONE | | |
| EP 3181711 | A1 | 21-06-2017 | CN | 106868353 A | 20-06-2017 |
| | | | EP | 3181711 A1 | 21-06-2017 |
| | | | JP | 6920052 B2 | 18-08-2021 |
| | | | JP | 2017186646 A | 12-10-2017 |
| | | | US | 2017165795 A1 | 15-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018144323 A

**Non-patent literature cited in the description**

- **A.J. BOSCH ; R. SENDEN ; W. ENTELMANN ; M. KNÜWER ; F. PALM.** Scalmalloy® - A unique high strength and corrosion insensitive AlMgScZr material concept
- Proceedings of the 11th International Conference on Aluminum Alloys. **J. HIRSCH ; G. GOTTSTEIN ; B. SKROTZKI.** Aluminum Alloys: Their physical and mechanical properties. Wiley-VCH
- **F. PALM ; P. VERMEER ; W. VON BESTENBOSTEL ; D. ISHEIM ; R. SCHNEIDER.** *Metallurgical peculiarities in hyper-eutectic AlSc and AlMgSc engineering materials prepared by rapid solidification processing*